**Europäisches Patentamt**

**European Patent Office**

**Office européen des brevets**

(11) Veröffentlichungsnummer: **0 230 490**

**A1**

## (12) EUROPÄISCHE PATENTANMELDUNG

(21) Anmeldenummer: 86100788.8

(22) Anmeldetag: 22.01.86

(51) Int. Cl.⁴: **G02C 1/02**

(43) Veröffentlichungstag der Anmeldung:
**05.08.87 Patentblatt 87/32**

(84) Benannte Vertragsstaaten:
**AT BE CH DE FR GB IT LI LU NL SE**

(71) Anmelder: **Baethke, Hans-Joachim**
**Georgenschwaigstrasse 18**
**D-8000 München 40(DE)**

(72) Erfinder: **Baethke, Hans-Joachim**
**Georgenschwaigstrasse 18**
**D-8000 München 40(DE)**

(74) Vertreter: **Fehners, Klaus Friedrich, Dipl.-Ing.**
**Dipl.-Wirtsch.-Ing. et al**
**Patentanwälte Dipl.-Ing. A. Wedde Dipl.-Ing.**
**K. Empl Dipl.-Ing., Dipl.-Wirtsch.-Ing. K.**
**Fehners Schumannstrasse 2**
**D-8000 München 80(DE)**

(54) **Halte- und Befestigungsvorrichtung für Gläser in Brillengestellen.**

(57) Es wird eine Vorrichtung zur Halterung, Befestigung und insbesondere Justierung individuell gestalteter Gläser 2L bzw. 2R in bzw. an einem Brillengestell 1 geschaffen, welches im wesentlichen ein annähernd in Augenbrauenhöhe und benachbart zu den oberen Rändern der Gläser 2L bzw. 2R verlaufendes Mittelteil 3 aufweist, an dessen rechter und linker Backe 5L bzw. 5R jeweils mittels Scharniere ein Bügel 6L bzw. 6R einklappbar befestigt ist, wobei die Vorrichtung aus mindestens einer oder zwei getrennten, zumindest teilweise der Form des Mittelteiles 3 entsprechend verlaufenden und an diesem befestigten Schienen 7L bzw. 7R besteht, an welchen das bzw. die Gläser 2L bzw. 2R gehalten sind. Die Schienen 7L bzw. 7R verlaufen bevorzugt auf der dem Kopf des Brillenträgers abgewandten Aussenseite des Mittelteiles 3 und weisen jeweils mindestens zwei Bolzen auf, welche durch im Mittelteil 3 vorgesehene Bohrungen hindurchstehen und auf welchen die jeweiligen Gläser 2L bzw. 2R mit den ihnen vorgesehenen entsprechenden Bohrungen aufgesetzt und durch entsprechende Befestigungsmittel gehalten sind.

FIG. 1

## Halte-und Befestigungsvorrichtung für Gläser in Brillengestellen

Die Erfindung betrifft eine Vorrichtung zur Halterung, Befestigung und insbesondere Justierung individuell gestalteter Gläser in bzw. an einem Brillengestell, welches im wesentlichen ein, entweder annähernd in Augenbrauenhöhe und benachbart zu den oberen Rändern der Gläser oder unterhalb der Gläser und über den Nasenrücken verlaufendes Mittelteil aufweist, an dessen rechter bzw. linker Backe jeweils mittels eines Scharnieres ein Bügel einklappbar befestigt ist.

Bei den bekannten Brillen üblicher Bauart ist das Mittelteil als die beiden Gläser vollständig umgebender Rahmen ausgebildet, wobei die beiden jeweiligen Brillenfassungen an ihren, der Nase des Brillenträgers benachbarten Abschnitten als Nasenstege ausgebildet sind.
Solche Brillen weisen insbesondere eine grosse Stabilität auf.

Aus ästhetischen Gründen ist es aber auch bekannt, Brillengläser nicht vollständig in ein als Rahmen ausgebildetes Mittelteil eines Brillengestelles zu fassen, sondern diese nur entweder an ihrem oberen oder aber unteren Rand in das entsprechend geformte Mittelteil einzubinden. Damit nun die Brillengläser nicht aus einem solchen Mittelteil eines Brillengestelles herausfallen, wird der nicht vom Rahmen eingefasste Rand der Gläser mit einer Nut versehen und ein jeweils mit seinen Enden sowohl in Backennähe des Mittelteils als auch in der Nähe des Nasensteges befestigter Nylonfaden ist in der Nut des jeweiligen Glases geführt und hält dieses.

Den vorbeschriebenen bekannten Brillengestellen ist gemeinsam, dass die Gläser den jeweiligen, durch die Ausgestaltung des Mittelteils der Brillengestelle vorgegebenen Formen und Abmessungen genauestens angepasst und in diese eingesetzt werden müssen.

Aufgabe der Erfindung ist es, den vorstehend geschilderten Nachteil zu beheben und insbesondere ein Brillengestell zu schaffen, welches ein Mittelteil aufweist, an welchem individuell gestaltete Gläser, also Gläser von unterschiedlicher Formgebung, Farbe und Dicke etc., befestigt, gehalten und insbesondere auch justiert werden können, wobei darüberhinaus eine schnelle und einfache Auswechselbarkeit von Brillengläsern einerseits und Brillengestellen andererseits gegeben sein soll.

Diese Aufgabe wird dadurch gelöst, dass die Vorrichtung der eingangs genannten Art aus mindestens einer, zumindest teilweise der Form des Mittelteiles entsprechend verlaufender und an diesem befestigter Schiene besteht, an welcher das bzw. die Gläser gehalten ist bzw. sind.
Die Anordnung eines besonderen, als Schiene ausgebildeten Be festigungsteiles, welcher genau dem Verlauf des Mittelteiles entspricht, gewährleistet, dass die Gläser nicht unmittelbar in das Mittelteil des Brillengestelles eingesetzt bzw. keine, für die Aufnahme der Glasränder geeigneten Nuten und Rillen in das Mittelteil selbst vorgesehen werden müssen.

In erfindungsgemässer Weiterbildung verläuft die Schiene auf der dem Kopf des Brillenträgers abgewandten Aussenseite des Mittelteiles und weist auf ihrer, der Aussenseite zugewandten Seite mindestens zwei Bolzen auf, welche durch, im Mittelteil vorgesehene Bohrungen hindurchstehen, weist das zugehörige Glas an seinem entsprechenden Rand ebenfalls zwei Bohrungen auf und ist mit diesen auf den Bolzen der Schiene angeordnet und ist weiterhin je Bolzen ein Befestigungsmittel vorgesehen.
Diese vorstehend beschriebene Ausbildung gewährleistet, dass sowohl Schiene wie auch das zugehörige Glas gegenseitig am Mittelteil fixiert und gehalten werden, wobei insbesondere eine gegenseitige Verspannung erreicht wird.

In vorteilhafter weiterer Ausbildung kann die Schiene auf der dem Kopf des Brillenträgers zugewandten innenseite des Mittelteils angeordnet sein und auf ihrer, der Innenseite zugewandten Seite mindestens zwei Bolzen aufweisen, welche durch, im Mittelteil vorgesehene Bohrungen hindurchstehen, kann das zugehörige Glas an den entsprechenden Rändern ebenfalls zwei Bohrungen aufweisen und mit diesen auf den Bolzen der Schiene angeordnet sein, wobei das Glas zwischen der Schiene und der Innenseite des Mittelteils eingebunden und wobei je Bolzen ein Befestigungsmittel vorgesehen ist.
Diese vorbeschriebene Anordnung der Schiene auf der Innenseite des Mittelteiles erlaubt durch besondere Anpassung an die Krümmung der Gläser eine zusätzliche Einspannung der oberen Glasränder und dadurch eine eventuell gewünschte zusätzliche Fixierung derselben.

Vorteilhaft verläuft die Schiene über nahezu die gesamte Länge des Mittelteiles, weist vier Bolzen auf und hält beide Gläser gleichzeitig.
Hierdurch werden die einzelnen Arbeitsvorgänge des Ansetzens der Schienen am Mittelteil zusammengefasst zu einem einzigen Arbeitsvorgang.
Die vorstehend erwähnten Befestigungsmittel können jeweils als Mutter ausgebildet sein.
Vorteilhaft sind die Bolzen als hülsenförmige Körper und die Befestigungsmittel als Schrauben individueller Länge ausgebildet. Hierdurch erübrigt sich das Abkneifen der überstehenden Bolzen nach Aufschrauben der Muttern.

In erfindungsgemässer Weiterbildung sind sowohl eine vordere als auch eine hintere, jeweils dem Mittelteil zumindest teilweise entsprechend verlaufende und an diesem befestigte Schiene vorgesehen, wobei entweder die äussere oder die innere Schiene auf ihrer, jeweils dem Mittelteil zugewandten Seite mindestens zwei Bolzen aufweist, welche durch, im Mittelteil vorgesehene Bohrungen hindurchstehen und weist das jeweilige Glas an seinem entsprechenden Rand ebenfalls zwei Bohrungen auf und ist mit diesen ebenfalls auf den Bolzen angeordnet und zwischen der Innenseite des Mittelteiles und der der Innenseite zugewandten Seite der inneren Schiene eingebunden.

Diese doppelte Anordnung einer Schiene vereint die vorstehend näher beschriebenen Vorteile bei den Ausführungsformen mit jeweils nur einer Schiene.

In weiterer Ausbildung der Erfindung liegt die hintere Schiene unmittelbar an der Innenseite des Mittelteiles an und enthält eine, für das Einsetzen des jeweiligen Randes der Gläser vorgesehene Nut, wobei mittig, zwischen den eingesetzten Gläsern jeweils ein rechter und linker Nasensteg vorgesehen sind und jeweils am Ende eines Nasensteges und am linken bzw. rechten Ende der hinteren Schiene in Nähe der Backen des Mittelteiles ein Kunststoff-Faden befestigbar ist, welcher den schienenfreien, mit einer Nut versehenen Rand des jeweiligen Glases hält.

Diese Ausbildung der hinteren Schiene erlaubt, die Gläser vor Ansetzen am Mittelteil des Brillengestelles zusammen mit dem Nylonfaden an der Schiene zu befestigen und dann als fertiggestellte Einheit am Mittelteil zu befestigen.

Die Erfindung nicht beschränkende Ausführungsbeispiele sind in den Zeichnungen dargestellt.

Es zeigen:

Fig. 1 eine perspektivische Vorderansicht einer Brille mit geteilter vorderer Schiene,

Fig. 2 eine perspektivische Rückansicht der Brille mit einer ersten Ausführungsform der Glashalterung,

Fig. 3 eine perspektivische Vorderansicht einer Brille mit durchgehender vorderer Schiene,

Fig. 4 einen Schnitt gemäss Linie IV -IV in Fig. 2,

Fig. 5 eine perspektivische Rückansicht der Brille mit einer zweiten Ausführungsform der Glashalterung,

Fig. 6 einen Schnitt gemäss Vi - VI in Fig. 5,

Fig. 7 eine teilweise Schnitt-Darstellung einer Ausführungsform der Glasbefestigung entsprechend Fig. 6,

Fig. 8 eine teilweise Schnitt-Darstellung einer Ausführungsform der Glasbefestigung entsprechend Fig. 4.

Die in den Figuren der Zeichnungen jeweils dargestellte Brille besteht im wesentlichen aus einem Brillengestell 1 und den darin bzw. daran befestigten Gläsern 2R und 2L. Das Brillengestell 1 enthält ein Mittelteil 3 sowie zwei, jeweils mittels Scharniere 4R bzw. 4L an den rechten bzw. linken Backen 5R bzw. 5L des Mittelteiles 3 einklappbar befestigte Bügel 6R bzw. 6L.

In den Figuren ist das Mittelteil 3 annähernd in Augenbrauenhöhe des Brillenträgers und benachbart zu den oberen Rändern der Gläser 2R bzw. 2L geführt, es ist aber auch eine andere, in den Zeichnungen nicht dargestellte Ausführungsform möglich, bei der das Mittelteil unterhalb der Gläser 2R bzw. 2L und über den Nasenrücken des Brillenträgers geführt verläuft.

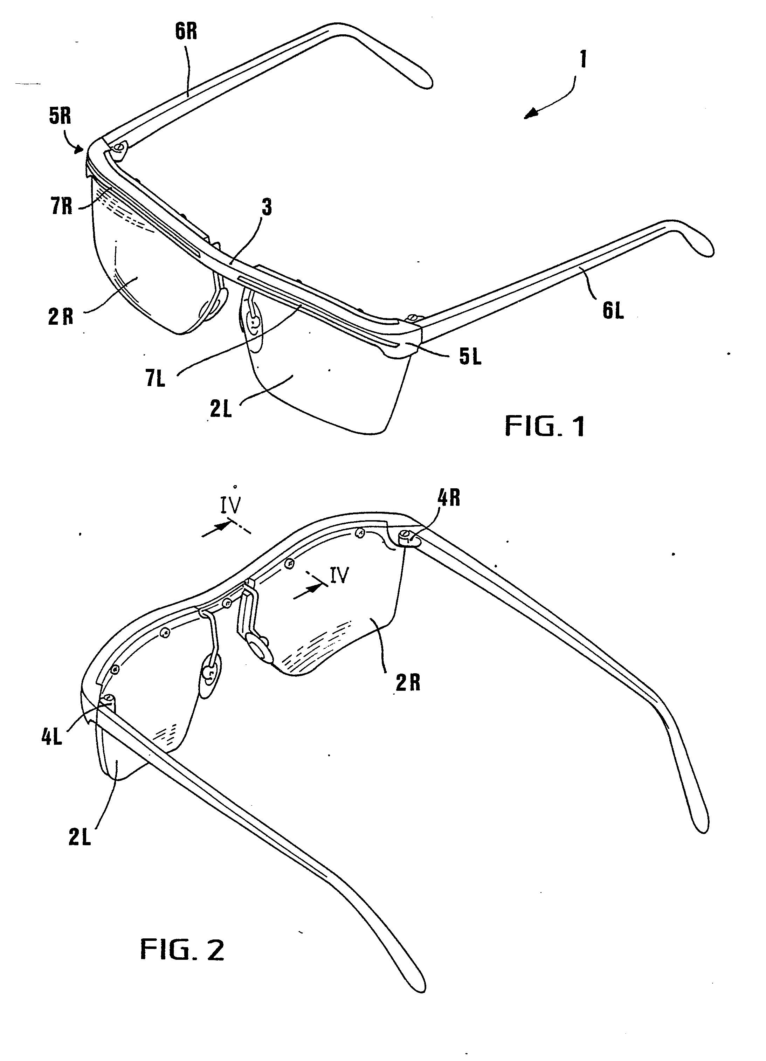

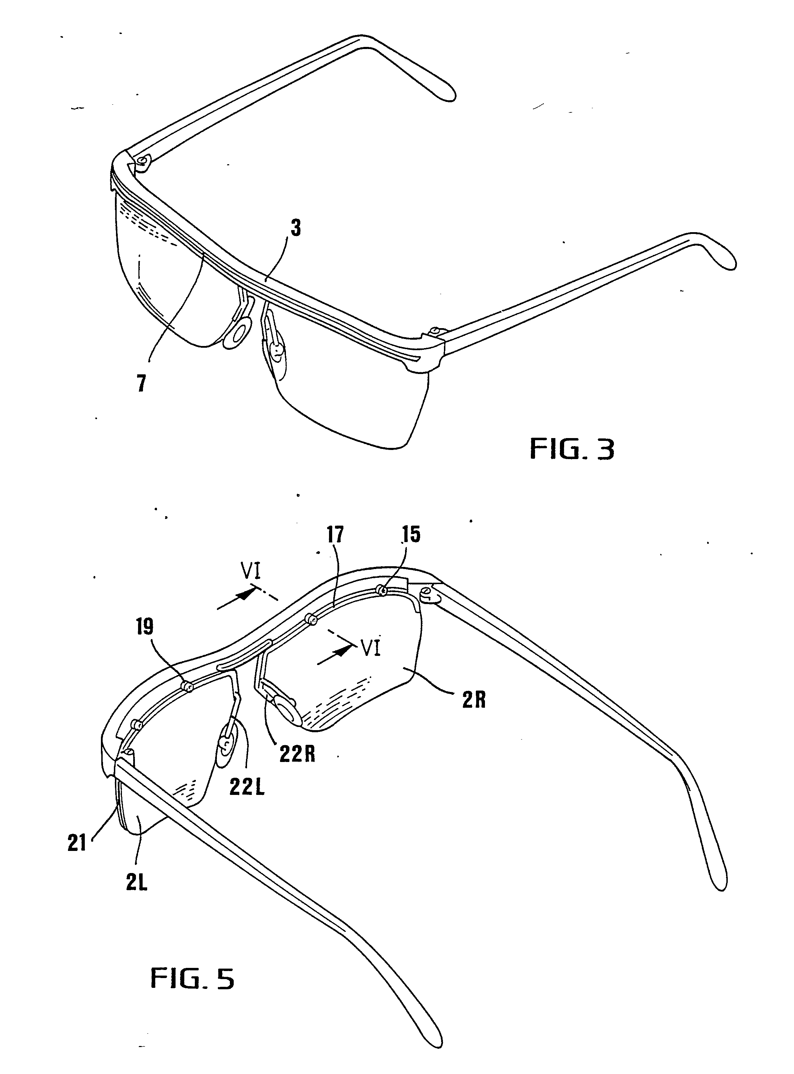

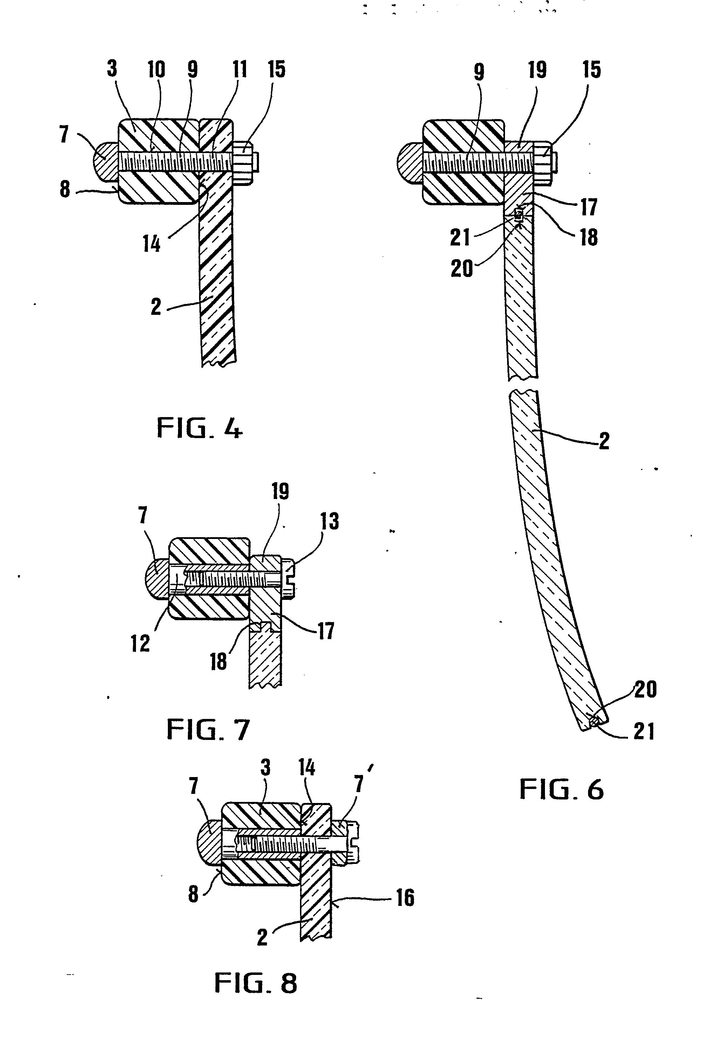

Die eigentliche Vorrichtung zur Halterung, Befestigung und insbesondere Justierung der jeweiligen Gläser an dem Brillengestell ist als Schiene 7 ausgebildet, welche der Form des Mittelteiles entsprechend und, wie in Fig. 3 und 4 dargestellt, auf der von dem Kopf des Brillenträgers abgewandten Aussenseite 8 des Mittelteiles 3 verläuft. Diese Schiene 7 kann jedoch auch, wie in Fig. 1 dargestellt, in zwei Einzelschienen 7R bzw. 7L geteilt sein.

Die Schiene 7 weist mindestens vier, die Schienen 7R bzw. 7L jeweils mindestens zwei Bolzen 9 auf, welche durch, im Mittelteil 3 vorgesehene Bohrungen 10 hindurchstehen und jeweils ein Gewinde 11 aufweisen.

Wie in Fig. 7 dargestellt, können die Bolzen der Schiene 7 als ein Innengewinde aufweisende Hülsen 12 ausgebildet sein, in welche Schrauben 13 eingedreht werden können.

Gemäss einer ersten, in Figuren 1, 2 und 4 dargestellten Ausführungsform sind die jeweiligen Gläser 2R bzw. 2L unmittelbar auf den Bolzen 9 und mit ihrem oberen Rand an der Innenseite 14 des Mittelteiles 3 anliegend an der Schiene 7 befestigt, wobei auf die mit Aussengewinde versehenen Bolzen 9 und Muttern 15 aufgesetzt sind.

In einer in Fig. 8 dargestellten erweiterten Ausführungsform ist zusätzlich zur Schiene 7 auf der Aussenseite 8 des Mittelteiles 3 eine hintere Schiene 7' unmittelbar anliegend auf der Innenfläche 16 des Glases 2 vorgesehen.

In einer weiteren in den Figuren 5, 6 und 7 dargestellten Ausführungsform sind die Gläser 2R bzw. 2L nicht unmittelbar auf den Bolzen 9 befestigt, sondern an ihren oberen Rändern an einer Schiene 17 gehalten. Diese Schiene 17 selbst weist Ösen 19 auf, welche auf den Bolzen 9 angeordnet und dort mittels der Muttern 15 gehalten sind. Auch die in Fig. 7 dargestellte Ausführungsform mit Hülsen 12 und Schrauben 13 ist möglich.

An ihren Rändern weisen die Gläser 2R bzw. 2L eingeschliffene Nuten 20 auf, in welchen ein Nylonfaden 21 geführt und an der Schiene 17, jeweils benachbart zu den Backen 5R bzw. 5L des Mittelteiles 3 und/oder am linken bzw. rechten Nasensteg 22L bzw. 22R befestigt ist.

Es ist auch, wie in Fig. 7 dargestellt, möglich, die an der Schiene 17 anliegenden Ränder der Gläser 2R bzw. 2L anstelle einer Nut 20 mit einer Nase 23 zu versehen und diese unmittelbar, ohne Nylonfaden 21 in die Nut 18 einstehen zu lassen. Dann verläuft der Nylonfaden 21 nur unterhalb und teilweise seitlich an den Rändern der Gläser 2R bzw. 2L.

Die Nasenstege 22L bzw. 22R werden von abgebogenen Enden der Schiene 17 gebildet (siehe Fig. 5) bzw. können als gesonderte Teile an der Schiene 17 angesetzt sein. In einer weiteren, nicht in den Figuren dargestellten Ausführungsform kann die Schiene 17 zweiteilig ausgebildet sein, d.h. eine über den Nasensteg 22L bzw. 22R durchlaufende Verbindung, wie in Fig. 5 dargestellt, ist nicht vorhanden.

## Ansprüche

1.) Vorrichtung zur Halterung, Befestigung und insbesondere Ju stierung individuell gestalteter Gläser in bzw. an einem Brillengestell, welches im wesentlichen ein, entweder annähernd in Augenbrauenhöhe und benachbart zu den oberen Rändern der Gläser oder unterhalb der Gläser und über den Nasenrücken des Brillenträgers verlaufendes Mittelteil aufweist, an dessen rechter und linker Backe jeweils mittels Scharniere ein Bügel einklappbar befestigt ist, **dadurch gekennzeichnet,** dass die Vorrichtung aus mindestens einer, zumindest teilweise der Form des Mittelteiles (3) entsprechend verlaufender und an diesem befestigter Schiene (7, 7R bzw. 7L), besteht, an welcher das bzw. die Gläser (2R bzw. 2L) gehalten ist/sind.

2.) Vorrichtung nach Anspruch 1, **dadurch gekennzeichnet,** dass die Schiene (7, 7R bzw. 7L) auf der dem Kopf des Brillenträgers abgewandten Aussenseite (8) des Mittelteils (3) verläuft und auf ihrer, der Aussenseite (8) zugewandten Seite mindestens zwei Bolzen (9) aufweist, welche durch, im Mittelteil (3) vorgesehene Bohrungen (10) hindurchstehen, dass das zugehörige Glas an seinem entsprechenden Rand ebenfalls zwei Bohrungen (10) aufweist und mit diesen auf den Bolzen (9) der Schiene (7, 7R bzw. 7L) angeordnet und dass je Bolzen (9) ein Befestigungsmittel vorgesehen ist.

3.) Vorrichtung nach Anspruch 1, **dadurch gekenn zeichnet,** dass die Schiene (7, 7R bzw. 7L) benachbart zu der dem Kopf des Brillenträgers zugewandten Innenseite (14) des Mittelteils (3) an geordnet ist und auf ihrer, der Innenseite (14) zugewandten Seite mindestens zwei Bolzen (9) aufweist, welche durch, im Mittelteil (3) vorgesehene Bohrungen (10) hindurchstehen, dass das zugehörige Glas (2R bzw. 2L) an den entsprechenden Rändern ebenfalls zwei Bohrungen aufweist und mit diesen auf den Bolzen (9) der Schiene (7, 7R bzw. 7L) angeordnet ist, dass das Glas (2R bzw. 2L) zwischen der Schiene (7, 7R bzw. 7L) und der Innenseite (14) des Mittelteils (3) eingebunden und dass je Bolzen (9) ein Befestigungsmittel vorgesehen ist.

4.) Vorrichtung nach Anspruch 2 und 3, **dadurch gekennzeichnet,** dass die Schiene (7) über nahezu die gesamte Länge des Mittelteils (3) verläuft, vier Bolzen aufweist und beide Gläser (2R bzw. 2L) gleichzeitig hält.

5.) Vorrichtung nach einem der vorhergehenden Ansprüche, **dadurch gekennzeichnet,** dass das Befestigungsmittel als Mutter (15) ausgebildet ist.

6.) Vorrichtung nach einem der vorhergehenden Ansprüche, **dadurch gekennzeichnet,** dass die Bolzen (9) als hülsenförmige Körper (12) und die Befestigungsmittel als Schrauben (13) individueller Länge ausgebildet sind.

7.) Vorrichtung nach Anspruch 1, **dadurch gekennzeichnet,** dass sowohl eine vordere als auch eine hintere, jeweils dem Mittelteil (3) zumindest teilweise entsprechend verlaufende und an diesem befestigte Schiene (7 bzw. 7') vorgesehen sind, wobei entweder die äussere oder die hintere Schiene (7 bzw. 7') auf ihrer, jeweils dem Mittelteil (3) zugewandten Seite mindestens zwei Bolzen (9) aufweist, welche durch, im Mittelteil (3) vorgesehene Bohrungen (10) hindurchstehen und dass das jeweilige Glas (2R bzw. 2L) an seinem entsprechenden Rand ebenfalls zwei Bohrungen aufweist und mit diesen ebenfalls auf den Bolzen (9) angeordnet und zwischen der Innenseite (14) des Mittelteils (3) und der der Innenseite (14) zugewandten Seite der hinteren Schiene (7') eingebunden ist.

8.) Vorrichtung nach Anspruch 7, **dadurch gekennzeichnet,** dass die vordere und hintere Schiene (7 bzw. 17) über die nahezu gesamte Länge des Mittelteils (3) verlaufen und beide Gläser (2R bzw. 2L) gleichzeitig halten.

9.) Vorrichtung nach Anspruch 7, **dadurch gekennzeichnet,** dass die hintere Schiene (17) unmittelbar an der Innenseite (14) des Mittelteils (3) anliegt und eine, für das Einsetzen der jeweiligen Gläser (2R bzw. 2L) vorgesehene Nut (18) enthält, wobei mittig, zwischen den eingesetzten Gläsern, jeweils ein rechter und linker Nasensteg (22R bzw. 22L) vorgesehen ist und jeweils am Ende eines Nasensteges und am linken bzw. rechten Ende der hinteren Schiene (17) in Nähe der Backen (5R bzw.

5L) des Mittelteils (3) ein Kunststoff-Faden (21) befestigbar ist, welcher in der Nut (18) sowie in einer, in den Rändern der Gläser (2R bzw. 2L) vorgesehenen Nut (20) verläuft und die Gläser hält.

FIG. 1

FIG. 2

FIG. 3

FIG. 5

0 230 490

FIG. 4

FIG. 7

FIG. 8

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 464 496 (M. BERMAN) * Ansprüche * | 1,3 | G 02 C 1/02 |
| Y | CH-A- 345 477 (R. TARDY) * Seite 2 * | 1-3 | |
| Y | CH-A- 298 946 (SOCIETE INDUSTRIELLE DE LUNETTERIE) * Seite 2 * | 1-3 | |
| A | US-A-2 894 429 (G. LISSAC) * Insgesamt * | 1-9 | |
| A | GB-A- 720 546 (BENTLAY) * Insgesamt * | 1-9 | |
| A | FR-E- 63 821 (J.P.N. VEYRAT) * Insgesamt * | 1-9 | RECHERCHIERTE SACHGEBIETE (Int. Cl.4) G 02 C 1/02 |

Der vorliegende Recherchenbericht wurde für alle Patentansprüche erstellt.

| Recherchenort | Abschlußdatum der Recherche | Prüfer |
|---|---|---|
| DEN HAAG | 11-09-1986 | CALLEWAERT-HAEZEBROU |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82